**Europäisches Patentamt**

**European Patent Office**

**Office européen des brevets**

(19)

(11) Publication number: **0 217 476**
**B1**

(12) # EUROPEAN PATENT SPECIFICATION

(45) Date of publication of the patent specification:
27.06.90

(51) Int. Cl.⁵: **B65G 47/88,** B65G 47/26,
B65G 15/00

(21) Application number: **86201686.2**

(22) Date of filing: **30.09.86**

(54) Dosing apparatus.

(30) Priority: **30.09.85 NL 8502660**

(43) Date of publication of application:
**08.04.87 Bulletin 87/15**

(45) Publication of the grant of the patent:
**27.06.90 Bulletin 90/26**

(84) Designated Contracting States:
**AT BE CH DE FR GB IT LI NL SE**

(56) References cited:
**DE-U- 1 869 381**
**FR-A- 2 337 676**
**US-A- 3 978 971**
**US-A- 4 012 185**

(73) Proprietor: **UNILEVER NV, Burgemeester
s'Jacobplein 1 P.O. Box 760, NL-3000 DK Rotterdam(NL)**

(84) Designated Contracting States: **BE CH DE FR IT LI NL SE
AT**

(73) Proprietor: **UNILEVER PLC, Unilever House Blackfriars
P.O. Box 68, London EC4P 4BQ(GB)**

(84) Designated Contracting States: **GB**

(72) Inventor: **van Rij, Abraham Willem Marines,
Kraanvogellaan 54, NL-3136 JC Vlaardingen(NL)**

(74) Representative: **Keppels, Willem Richard Engelbertus
Gerardus, Drs. et al, Unilever N.V. Patent Division
P.O.Box 137, NL-3130 AC Vlaardingen(NL)**

ACTORUM AG

## Description

The invention relates to an apparatus and a method for dosing conical articles, in particular conical ice confection products.

In the production and handling of such conical articles the operation speed of successive production and handling machines should preferably be more or less independent from each other. For that purpose a dosing apparatus may be used, usually comprising a conveying device and an escapement which escapement is operated dependent on the required throughput speed. An example of such dosing apparatus is described in US-A-3 978 971, disclosing a dosing apparatus for articles having a thicker and a thinner end, comprising a conveying channel and an escapement. This apparatus is designed for dosing bulbs for electric lamps and the conveying channel thereof comprises two moving parallel conveyor ropes and a fixed bottom or drag strip underneath the ropes along which bottom the bulbs skid when conveyed.

If the articles conveyed by this apparatus are fed in at a higher rate than they are discharged by the escapement they will accumulate and stack slightly onto each other. Thereby the articles will be lifted from one of the conveyor ropes although they remain in slipping contact with the other one.

If such an apparatus would be used for dosing conical articles such as conical ice confection products these articles would be easily damaged by the slipping rope, this is in particular true if these articles are provided with a conical packaging.

In order that this risk of damaging the articles or the enveloping packaging is reduced or prevented the invention provides a dosing apparatus of the general kind described hereinbefore which is characterized in that part of the width of the bottom of said channel is formed by a conveyor belt. This conveyor belt is to be driven at the highest desirable throughput speed, while the escapement is operated such that each time at the correct instant an article is let through. If fewer articles are let through by the escapement than the conveying device is supplying, an congestion of articles will occur before said escapement.

Owing to the conical shape, the successive articles will slide on top of each other, so that the points of the cones only rest on the bottom of the conveying channel, an the risk of damage to the articles by the passing conveyor belt is reduced considerably.

By taking care that the points of the cones come to rest beside the conveyor belt, the forces exerted by the belt on the congested articles are reduced to zero. This may be simply achieved by putting the leading article in the correct position, whereby successive articles due to the conical shape will be forced in the same position. To prevent any mis-use preferred embodiments of the invented apparatus are characterised in that either the belt forms the central part of the bottom or the conveyor belt is slanting in a direction transverse to the conveying direction and downward towards a side of the bottom which is not formed by the belt. Hereby it is additionally achieved that the articles are uniformly directed in the dosing apparatus.

In order that the articles are reliably conveyed on the conveyor belt, the upper surface of that belt is preferably about coplanar with the remaining part of the bottom. Differences in height can be made acceptable by bevelling the higher edge. In practice, the upper surface of the conveyor belt will be in the order of 0 to 1/2 mm below that of the adjacent part of the bottom.

The invention also relates to a method for dosing articles having a thicker and a thinner end, comprising feeding these articles with their thicker end forward into a conveying channel and discharging these articles therefrom by means of an escapement as is known as such from US-A-3 978 971 as discussed before.

To reduce or prevent the aforesaid problems associated therewith if conical articles are handled thereby the invention provides a method as described which is characterized in that conical articles are dosed using a conveying channel, at least part of the bottom of which is formed by a travelling conveyor belt.

For entirely preventing the slipping contact between the articles and the belt, i.e. even to prevent the points of the conical articles from skidding on the belt, it is preferred that the conveyor belt forms only part of the width of the bottom. Other preferred features of the apparatus are applicable with the method too.

In this connection may be remarked that DE-U-1 869 381 relates to a conveying device for flat articles such as letters, comprising a conveying channel, the entire bottom of which is formed by a conveyor belt. For temporarily stopping the articles they can be lifted and clamped between a barrier means which is movable transversely to the conveying direction of the conveyor belt and the opposite side wall of the channel. This apparatus is suited for flat articles only.

Fr-A-2 337 676 relates to a continuously running belt conveyor, the upper reach of which is supported on a wider table. Alongside the conveyor an inflatable tube is arranged for lifting flat-bottomed articles in case of congestion to prevent these articles from skidding on the conveyor. This proposal is unsuited for conical articles.

The invention will be exemplified in the following description of an embodiment which is schematically shown in the drawings in which

Fig. 1 shows a vertical longitudinal section,
Fig. 2 shows a view from above, and
Fig. 3 shows a vertical cross-section, along the line III-III in Fig. 2, of the dosing apparatus according to the invention.

An embodiment of the dosing apparatus according to the invention as shown in the drawings comprises a frame 1, in which a motor 2 for actuating a driving roller 3 of a conveyor belt 4 is fastened. The driving roller 3 is arranged at one end and an idling turning roller 5 at the other end thereof.

The upper stretch of the conveyor belt 4 between both rollers 3 and 5 is supported by a flat supporting plate 6 which is fixed to the frame. On both sides of the conveyor belt 4, flat bottom plates 7, 8 are fastened, which are of thickness equal to or slightly thicker than the conveyor belt 4, so that a groove is formed through which the belt is running.

A longitudinal angle bar 9, 10 is arranged on top of each of the bottom plates 7, 8 parallel to the conveyor belt 4, so that a conveying channel is formed. The conveyor belt 4 and portions of the bottom plates 7, 8 are forming the bottom of said channel.

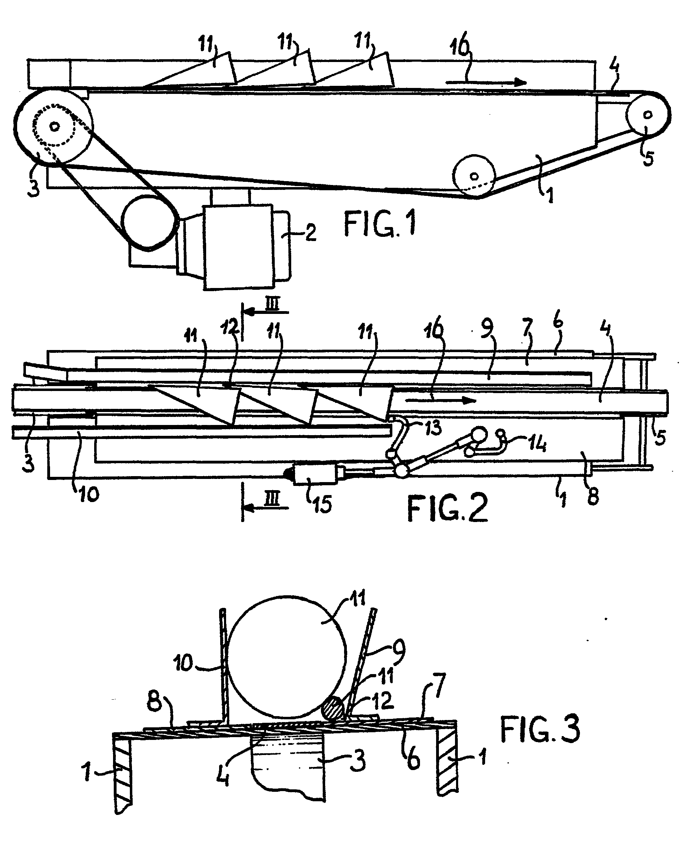

The conveyor belt 4 is slanting in a direction transverse to its conveying direction with respect to the horizontal as is apparent from Fig. 3. As a result, conical articles 11 will all rest with their point 12 at the lowermost part of the bottom, that is to say in the corner formed by the bottom plate 7 and the angle bar 9.

The dosing apparatus comprises a usual escapement, having two stopping means 13, 14, which alternatingly may be put in the conveying path of the conical articles using a motor means such as a pneumatic cylinder 15.

The operation of the dosing apparatus is as follows: conical articles 11 are put on the conveyor belt 4, travelling in the direction of the arrow 16. The upper stretch of the belt is driven in the same direction by the motor 2. Each article 11 is conveyed to the first stopping means 13 of the escapement and stopped thereby until the pneumatic cylinder 15 removes the first stopping means 13 out of and brings the second stopping means 14 into the conveying path of the articles 11. As a result, the first article resting on the conveyor belt is conveyed to the second stopping means 14 and stopped thereby.

When the stopping means 13, 14 are put in their original position again by the cylinder 15, the first article 11 can leave the escapement and be conveyed out of the dosing apparatus by the conveyor belt 4.

As soon as the supply of articles exceeds the discharge through the escapement, a number of articles will be gathered before this escapement. The thicker end of each article will be pushed up on the thinner end of the adjacent article owing to the conical shape of these articles. The former article will be lifted from the conveyor belt and will not be subjected to any conveying force. If the entire bottom of the channel were to be formed by the conveyor belt, only the point of each article would remain to be supported on this belt, so that the rubbing action of the belt would work on that point only.

When an article is let through by the escapement, the next one comes into contact with the belt again and will be conveyed thereby. On possible obstruction, the process as described hereinbefore will be repeated.

## Claims

1. Dosing apparatus for conical articles (11), comprising a conveying channel and an escapement (13, 14, 15), characterized in that part of the width of the bottom of said channel is formed by a conveyor belt (4).

2. Apparatus according to claim 1, characterized in that the conveyor belt is slanting in a direction transverse to the conveying direction (16) and downward towards a side of the bottom not being formed by the conveyor belt (4).

3. Apparatus according to claim 1, characterized in that the conveyor belt (4) forms the central part of the bottom.

4. Apparatus according to claim 1, 2 or 3, characterized in that the upper surface of the belt (4) is about coplanar with the remaining part (7, 8) of the bottom.

5. Apparatus according to claim 4, characterized in that the upper surface of the belt (4) is in the order of 0 to $\frac{1}{2}$ mm under the upper surface of the adjacent part (7, 8) of the bottom.

6. A method for dosing conical articles, comprising feeding these articles with their thicker end forward into a conveying channel and discharging these articles therefrom by means of an escapement (13, 14, 15), characterized in that the articles (11) are dosed using a conveying channel at least part of the bottom of which is formed by a travelling conveyor belt (4).

7. The method of claim 6, characterized in that the conveyor belt (4) forms only part of the width of the bottom.

8. The method according to claim 6 or 7, characterized in that the conveyor belt (4) is slanting in a direction transverse to conveying direction (16) and downward towards a side of the bottom not being formed by the conveyor belt (4).

9. The method according to claim 6 or 7, characterized in that the conveyor belt (4) forms the central part of the bottom.

10. The method according to any claim 6 to 9, characterized in that the upper surface of the belt is about coplanar with the remaining part (7, 8) of the bottom.

11. The method according to claim 10, characterized in that the upper surface of the conveyor belt (4) is in the order of 0 to $\frac{1}{2}$ mm under the upper surface of the adjacent part (7, 8) of the bottom.

## Patentansprüche

1. Dosiervorrichtung für kegelige Gegenstände (11), welche einen Förderkanal und eine Hemmvorrichtung (13, 14, 15) aufweist, dadurch gekennzeichnet, daß ein Teil der Breite des Bodens des genannten Kanals durch ein Förderband (4) gebildet ist.

2. Vorrichtung nach Anspruch 1, dadurch gekennzeichnet, daß das Förderband quer zur Förderrichtung (16) zu einer Seite des Bodens hin, welche nicht durch das Förderband (4) gebildet ist, nach unten geneigt ist.

3. Vorrichtung nach Anspruch 1, dadurch gekennzeichnet, daß das Förderband (4) den Mittelteil des Bodens bildet.

4. Vorrichtung nach Anspruch 1, 2 oder 3, dadurch gekennzeichnet, daß die obere Fläche des Bandes (4) und der übrige Teil (7, 8) des Bodens ungefähr in einer Ebene liegen.

5. Vorrichtung nach Anspruch 4, dadurch gekennzeichnet, daß die obere Fläche des Bandes (4) in der Größenordnung von 0 bis 1/2 mm unter der oberen Fläche des angrenzenden Teiles (7, 8) des Bodens liegt.

6. Verfahren zum Dosieren kegeliger Gegenstände, bei dem diese Gegenstände mit ihrem dickeren Ende voran einem Förderkanal zugeführt werden und diese Gegenstände hieraus mittels einer Hemmvorrichtung (13, 14, 15) ausgegeben werden, dadurch gekennzeichnet, daß die Gegenstände (11) unter Einsatz eines Förderkanals, bei dem mindestens ein Teil seines Bodens durch ein laufendes Förderband (4) gebildet ist, dosiert werden.

7. Verfahren nach Anspruch 6, dadurch gekennzeichnet, daß das Förderband (4) nur einen Teil der Breite des Bodens bildet.

8. Verfahren nach Anspruch 6 oder 7, dadurch gekennzeichnet, daß das Förderband (4) quer zur Förderrichtung (16) zu einer Seite des Bodens hin, welche nicht durch das Förderband (4) gebildet ist, nach unten geneigt ist.

9. Verfahren nach Anspruch 6 oder 7, dadurch gekennzeichnet, daß das Förderband (4) den mittleren Teil des Bodens bildet.

10. Verfahren nach einem der Ansprüche 6 bis 9, dadurch gekennzeichnet, daß die obere Fläche des Bandes und der übrige Teil (7, 8) des Bodens ungefähr in einer Ebene liegen.

11. Verfahren nach Anspruch 10, dadurch gekennzeichnet, daß die obere Fläche des Förderbandes (4) in der Größenordnung von 0 bis 1/2 mm unter der oberen Fläche des angrenzenden Teiles (7, 8) des Bodens liegt.

## Revendications

1. Doseur pour articles coniques (11) comprenant un canal d'acheminement et un échappement (13, 14, 15), caractérisé en ce qu'une partie de la largeur du fond dudit canal est formée par une courroie transporteuse (4).

2. Doseur selon la revendication 1, caractérisé en ce que la courroie transporteuse est inclinée dans une direction transversale par rapport à la direction d'acheminement (16) et vers le bas, pour aboutir à une paroi du fond qui n'est pas formée par la courroie transporteuse (4).

3. Doseur selon la revendication 1, caractérisé en ce que la courroie transporteuse (4) forme la partie centrale du fond.

4. Doseur selon la revendication 1, 2 ou 3, caractérisé en ce que la surface supérieure de la courroie (4) est sensiblement dans le même plan que la partie restante (7, 8) du fond.

5. Doseur selon la revendication 4, caractérisé en ce que la surface supérieure de la courroie (4) est à une distance d'environ 0 à 0,5 mm en dessous de la surface supérieure de la partie adjacente (7, 8) du fond.

6. Procédé de dosage d'articles coniques qui consiste à amener ces articles avec leur extrémité la plus épaisse dirigée vers l'avant dans un canal d'acheminement et à décharger ces articles de celui-ci au moyen d'un échappement (13, 14, 15), caractérisé en ce que les articles (11) sont dosés en utilisant un canal transporteur dont au moins une partie du fond est formée par une courroie transporteuse en mouvement (4).

7. Procédé selon la revendication 6, caractérisé en ce que la courroie transporteuse (4) ne constitue qu'une partie de la largeur du fond.

8. Procédé selon la revendication 6 ou 7, caractérisé en ce que la courroie transporteuse (4) est inclinée dans une direction transversale par rapport à la direction d'acheminement (16) et vers le bas en direction d'une paroi du fond qui n'est pas constituée par la courroie transporteuse (4).

9. Procédé selon la revendication 6 ou 7, caractérisé en ce que la courroie transporteuse (4) forme la partie centrale du fond.

10. Procédé selon l'une quelconque des revendications 6 à 9, caractérisé en ce que la surface supérieure de la courroie est à peu près dans le même plan que la partie restante (7, 8) du fond.

11. Procédé selon la revendication 10, caractérisé en ce que la surface supérieure de la courroie transporteuse (4) est à une distance d'environ 0 à 0,5 mm en dessous de la surface supérieure de la partie adjacente (7, 8) du fond.

FIG.1

FIG.2

FIG.3